# EUROPÄISCHE PATENTANMELDUNG

(11) **EP 0 705 020 A2**
(43) Veröffentlichungstag der Anmeldung: **03.04.1996**
(21) Anmeldenummer: 95202474.3
(22) Anmeldetag: 13.09.1995
(51) Int. Cl.: H04M 19/00

(54) **Schaltungsanordnung zum Speisen wenigstens einer Last**

(30) Priorität: 24.09.1994 DE 4434185
(71) Anmelder: Philips Patentverwaltung GmbH, D-22335 Hamburg (DE); PHILIPS ELECTRONICS N.V., NL-5621 BA Eindhoven (NL); Deutsche Telekom AG, D-53175 Bonn (DE)
(72) Erfinder: Weinfurtner, Günter, c/o Philips Patentverw. GmbH, D-22335 Hamburg (DE); Jungreitmeier, Werner, D-64397 Modautal (DE)
(74) Vertreter: Peters, Carl Heinrich, Dipl.-Ing.

(57) **Zusammenfassung**

Beschrieben wird eine Schaltungsanordnung zum Speisen wenigstens einer Last (64) aus einer Speisespannungsquelle (12), die zum Abgeben einer Speisespannung eingerichtet ist, die wahlweise auf einen Speisespannungswert, der niedriger als eine Bezugsspannung ist, und auf wenigstens einen weiteren Speisespannungswert, der höher als die Bezugsspannung ist, einstellbar ist, wobei von der (den) Last(en) (64) beim Empfangen einer Speisespannung, die niedriger als die Bezugsspannung ist, ein Kennsignal (bzw. Kennsignale) vorgegebener Art abgebbar ist (sind), durch welche(s) die Speisespannungsquelle auf einen vorgebbaren der Speisespannungswerte, die höher als die Bezugsspannung sind, umschaltbar ist.

Dadurch wird die Beschädigung der Lasten, insbesondere fremder lasten, vermieden.

## Beschreibung

Die Erfindung bezieht sich auf eine Schaltungsanordnung zum Speisen wenigstens einer Last aus einer Speisespannungsquelle.

Insbesondere in der Fernmeldetechnik tritt der Fall auf, daß Fernmeldeeinrichtungen, besonders, wenn sie außerhalb von Vermittlungsstellen oder dergleichen angeordnet sind, mit elektrischer Energie ferngespeist werden. Für diese Fernspeisung können entweder die ohnehin vorhandenen Signalübertragungsleitungen, d.h. Fernmeldeleitungen, aber auch zusätzliche Leitungen verwendet werden.

In einer derartigen Fernspeisung können an eine Speisespannungsquelle, die beispielsweise in einem Fernmeldeamt eingerichtet ist, mehrere Fernmelde- bzw. Signalübertragungseinrichtungen als Lasten über entsprechende Leitungen angeschlossen sein. Da bei derartigen Anlagen kein unmittelbarer räumlicher Zusammenhang mehr gegeben ist, muß besonderes Augenmerk darauf gerichtet werden, daß die Speisespannungsquelle und die zu speisenden Lasten bezüglich der zu erbringenden bzw. aufzunehmenden Leistungen aneinander angepaßt werden, um Beschädigungen oder Betriebsstörungen zu vermeiden. Insbesondere eine Überlastung der Speisespannungsquelle, aber auch eine ungenügende Speisung der Lasten, kann dabei jedoch in der Regel noch vom Ort der Speisespannungsquelle aus festgestellt und behoben werden.

Werden jedoch fernzuspeisende Signalübertragungseinrichtungen als Lasten zur Anwendung gebracht, die mit Speisespannungen unterschiedlicher Werte gespeist werden müssen, können in diesen Lasten bei einer Speisung mit einer zu hohen Speisespannung Beschädigungen auftreten, die vom Ort der Speisespannungsquelle aus nicht erkennbar und vor allem nicht vorhersehbar sind.

Die Erfindung hat die Aufgabe eine Schaltungsanordnung zum Speisen wenigstens einer Last aus einer Speisespannungsquelle derart auszubilden, daß Beschädigungen der Lasten durch zu hohe Speisespannungen, wie sie beispielhaft im vorstehenden beschrieben sind, ausgeschlossen werden.

Erfindungsgemäß wird diese Aufgabe gelöst durch eine Schaltungsanordnung zum Speisen wenigstens einer Last aus einer Speisespannungsquelle, die zum Abgeben einer Speisespannung eingerichtet ist, die wahlweise auf einen Speisespannungswert, der niedriger als eine Bezugsspannung ist, und auf wenigstens einen weiteren Speisespannungswert, der höher als die Bezugsspannung ist, einstellbar ist, wobei von der (den) Last(en) beim Empfangen einer Speisespannung, die niedriger als die Bezugsspannung ist, ein Kennsignal (bzw. Kennsignale) vorgegebener Art abgebbar ist (sind), durch welche(s) die Speisespannungsquelle auf einen vorgebbaren der Speisespannungswerte, die höher als die Bezugsspannung sind, umschaltbar ist.

Durch die Erfindung wird wirksam vermieden, daß zu hohe Speisespannungen an Lasten gelangen können, die eine geringere Spannungsfestigkeit haben. Die Speisespannungsquelle wird dabei erst auf einen Speisespannungswert, der höher als die Bezugsspannung ist, eingestellt, wenn sichergestellt worden ist, daß die bezüglich ihrer aufzunehmenden Speisespannung passenden Endgeräte, d.h. Signalverarbeitungseinrichtungen, angeschlossen sind. Dadurch wird der Betrieb derartiger Schaltungsanordnungen, insbesondere auch eine Inbetriebnahme nach baulichen Veränderungen, wie sie insbesondere in einem Fernmeldenetz sehr häufig sind, wesentlich vereinfacht und dabei gleichzeitig die Sicherheit vor Beschädigungen entscheidend verbessert. Weiterhin wird vermieden, daß bei einer Verschaltung gefährliche Spannungen unmittelbar an den Teilnehmer gelangen können.

Vorzugsweise unterbleibt somit bei der erfindungsgemäßen Schaltungsanordnung das Umschalten auf einen Speisespannungswert, der höher als die Bezugsspannung ist, wenn von der Speisespannungsquelle kein Kennsignal der vorgegebenen Art empfangen wird. Die beispielsweise bei einer Wederinbetriebnahme der Speisespannungsquelle zunächst abgegebene Speisespannung, deren Speisespannungswert kleiner als die Bezugsspannung ist und der allen überhaupt als Lasten zuschaltbaren Signalübertragungseinrichtungen ohne deren Beschädigung zuführbar ist, wird dann nicht weiter erhöht, sondern bleibt unterhalb der Bezugsspannung. Gegebenenfalls kann von der Speisespannungsquelle auch ein Fehlersignal abgegeben werden.

Andererseits sind die Lasten, insbesondere die solche bildenden Signalübertragungseinrichtungen, mit Einrichtungen zum Abgeben der Kennsignale ausgestattet, die gegebenenfalls im Gegensatz zu den übrigen Teilen der Lasten bzw. Signalübertragungseinrichtungen bereits mit einer Speisespannung betriebsbereit sind, die niedriger ist als die Bezugspannung, und die vorzugsweise zur Einsparung von elektrischer Energie oder zum Schutz vor Beschädigungen durch Überspannungen von der Speisespannungsquelle getrennt werden können, wenn die Speisespannung einen Wert annimmt, der höher als die Bezugsspannung ist.

Die Kennsignale können im einfachsten Fall lediglich eine Information darüber enthalten, ob der Speisespannungswert von der Speisespannungsquelle erhöht werden darf. Vorteilhaft können jedoch auch Kennsignale übertragen werden, die Informationen über die Art, insbesondere die Spannungsfestigkeit der die Kennsignale aussendenden Last enthalten. Mit derartigen Kennsignalen kann die Speisespannungsquelle beispielsweise gezielt auf einen zulässigen Speisespannungswert eingestellt werden.

In einer Fortbildung der erfindungsgemäßen Schaltungsanordnung umfassen die Kennsignale Schwingungen mit für jeden der Speisespannungswerte oberhalb der Bezugsspannung unterschiedlich vorgebbarer Frequenz. Die Steuerung der Speisespannungsquelle durch die Kennsignale erfolgt dann im wesentlichen durch eine einfache Frequenzselektion der empfangenen Kennsignale.

In einer anderen Fortbildung umfassen die Kennsignale digitale, für jeden der Speisespannungswerte oberhalb der Bezugsspannung unterschiedlich codierte Impulssignale. Damit läßt sich bevorzugt eine digitale Steuerung der Speisespannungsquelle vornehmen. Derartige Kennsignale empfehlen sich vor allem dann, wenn mit ihnen eine größere Informationsmenge, beispielsweise auch über Einzelheiten der aussendenden Last und gegebenenfalls ihres Einsatzortes, übertragen werden sollen.

Weitere Ausgestaltungen der Erfindung ergeben sich aus den Unteransprüchen.

Zwei Ausführungsbeispiele der Erfindung sind in der Zeichnung dargestellt und werden im nachfolgenden näher beschrieben. Es zeigen:
**Fig. 1** ein Blockschaltbild eines ersten Ausführungsbeispiels der Erfindung und
**Fig. 2** ein Blockschaltbild eines zweiten Ausführungsbeispiels der Erfindung.
Dabei sind übereinstimmende Elemente mit denselben Bezugszeichen versehen.

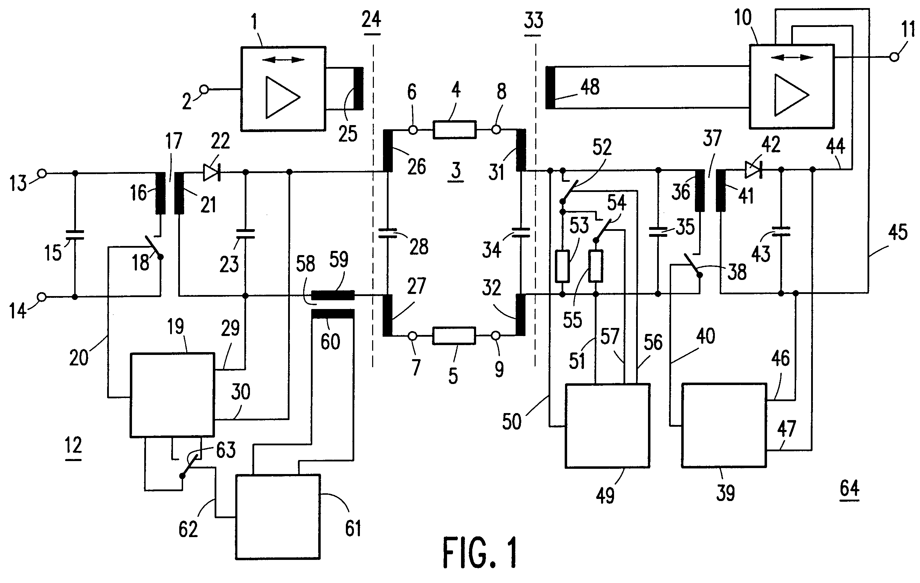

Im ersten Ausführungsbeispiel nach Fig. 1 ist mit dem Bezugszeichen 1 eine erste Signalverarbeitungseinrichtung bezeichnet, die beispielsweise der Signalübertagung in einer Fernmeldeanlage zwischen einem Anschluß 2 und einer Fernmeldeleitung 3 dient. Die Fernmeldeleitung 3 ist in Fig. 1 symbolisch mit zwei ohmschen Widerständen 4, 5 dargestellt, die als Ersatzschaltbilder für die tatsächlichen Leitungsimpedanzen der Fernmeldeleitung 3 dienen und zwischen Leitungsendanschlüssen 6, 7 bzw. 8, 9 angeordnet sind. Dabei bilden die Leitungsendanschlüsse 6, 7 das der ersten Signalverarbeitungseinrichtung 1 zugewandte Ende der Fernmeldeleitung 3. Die erste Signalverarbeitungseinrichtung 1 ist beispielsweise in einer Fernmelde-Vermittlungsstelle angeordnet, von der aus zumindest eine weitere Signalverarbeitungseinrichtung 10 mit elektrischer Energie ferngespeist werden soll. Diese weitere Signalverarbeitungseinrichtung 10, beispielsweise ebenfalls eine Fernmeldeeinrichtung, ist mit einem durch die Leitungsendanschlüsse 8, 9 gebildeten zweiten Leitungsende verbunden und weist einen Anschluß 11 auf. Im Betrieb dieser Schaltungsanordnung sollen Fernmeldesignale vom Anschluß 2 zum Anschluß 11 und umgekehrt übertragbar sein, wobei die Speisung der gesamten Schaltungsanordnung mit elektrischer Energie ausschließlich vom Ort der ersten Signalverarbeitungseinrichtung 1 her erfolgt.

Am Ort der ersten Signalverarbeitungseinrichtung 1 ist für die Fernspeisung der weiteren Signalverarbeitungseinrichtung 10 eine Speisespannungsquelle 12 vorhanden, der elektrische Energie beispielsweise aus einem Energieversorgungsnetz über zwei Netzanschlüsse 13, 14 zugeführt werden kann. Die Speisespannungsquelle 12 im Beispiel nach Fig. 1 ist als Schaltnetzteil zur Erzeugung einer Speisespannung aus einer über die Netzanschlüsse 13, 14 zugeführten (vorzugsweise gleichgerichteten) Netzspannung eingerichtet. In einer Abwandlung kann über die Netzanschlüsse 13, 14 auch Energie aus zum Beispiel einer Zentralbatterie oder dergleichen zugeführt werden. Das Schaltnetzteil der Speisespannungsquelle 12 umfaßt einen ersten Glättungskondensator 15, der zwischen den Netzanschlüssen 13, 14 angeordnet ist, sowie eine parallel dazu angeordnete Reihenschaltung aus einer Primärwicklung 16 eines ersten Schaltnetzteilübertragers 17 mit einem ersten Zerhackerschalter 18. Der erste Zerhackerschalter 18 ist in Fig. 1 der Einfachheit halber als mechanischer Schalter dargestellt, wird in der Praxis jedoch bevorzugt als elektronischer Schalter ausgebildet. Er wird von einer Steuerschaltung 19 abwechselnd in einen leitenden und einen gesperrten Zustand geschaltet, wozu eine Steuerleitung 20 dient.

Von einer Sekundärwicklung 21 des ersten Schaltnetzteilübertragers 17 wird eine Wechselspannung abgegriffen und einer Reihenschaltung aus einer ersten Diode 22 mit einem zweiten Glättungskondensator 23 zugeführt. Von den Anschlüssen des zweiten Glättungskondensators 23 wird dann die Speisespannung abgegriffen und den Leitungsendanschlüssen 6 bzw. 7 am ersten, mit der ersten Signalverarbeitungseinrichtung 1 verbundenen Leitungsende zugeführt. Zum Übertragen der Fernmeldesignale zwischen der ersten Signalverarbeitungseinrichtung 1 und den Leitungsendanschlüssen 6, 7 einerseits und der elektrischen Energie von den Anschlüssen des zweiten Glättungskondensators 23 zu den Leitungsendanschlüssen 6, 7 andererseits ist ein erster Leitungsübertrager 24 vorgesehen, der eine Primärwicklung 25 und eine in zwei Teile 26, 27 aufgeteilte Sekundärwicklung umfaßt. Je ein Anschluß des ersten und des zweiten Teils 26, 27 der Sekundärwicklung des ersten Leitungsübertragers 24 ist mit dem Leitungsendanschluß 6 bzw. 7 verbunden, wohingegen die anderen Anschlüsse der Teil 26, 27 der Sekundärwicklung des ersten Leitungsübertragers 24 mit je einem der Anschlüsse des zweiten Glättungskondensators 23 und außerdem miteinander über einen ersten Koppelkondensator 28 verbunden sind. Der erste Koppelkondensator 28 bildet für die von der Fernmeldeleitung 3 an die erste Signalverarbeitungseinrichtung 1 und umgekehrt zu übertragenden Signale einen Wechselstromkurzschluß.

Die Anschlüsse des zweiten Glättungskondensators 23 sind außerdem mit zwei Eingängen 29, 30 der Steuerschaltung 19 verbunden. Über diese Eingänge 29, 30 wird zum einen die Energieversorgung der Steuerschaltung 19 vorgenommen; zum anderen wird die über die Eingänge 29, 30 zugeführte Spannung als Steuergröße für die Bildung eines Steuersignals an den ersten Zerhackerschalter 18 über die Steuerleitung 20 herangezogen. Vorzugsweise ist die Steuerschaltung 19 mit einem Pulsweitenmodulator ausgebildet, der über die Steuerleitung 20 ein pulsweitenmoduliertes Impulssignal als Steuersignal an den ersten Zerhackerschalter 18 abgibt, wodurch dieser derart gesteuert wird, daß die Speisespannung am zweiten Glättungskondensator 23 wenigstens nahezu lastunabhängig konstant ist.

Die Signalverarbeitungseinrichtung 10 am durch die Leitungsendanschlüsse 8, 9 gebildeten zweiten Leitungsende wird ebenfalls durch ein Schaltnetzteil mit Energie versorgt, welches aus der Speisespannungsquelle 12 über die Fernmeldeleitung 3 ferngespeist wird. Dazu sind die Leitungsendanschlüsse 8, 9 am zweiten Leitungsende durch eine Reihenschaltung zweier Teile 31, 32 einer Sekundärwicklung eines zweiten Leitungsübertragers 33 mit einem zweiten Koppelkondensator 34 überbrückt. Von den Anschlüssen des zweiten Koppelkondensators 34, der wiederum für die zwischen den Signalverarbeitungseinrichtungen 1 und 10 zu übertragenden Fernmeldesignale einen Kurzschluß bildet, wird die um die Spannungsverluste in der Fernmeldeleitung 3 und den Sekundärwicklungen 26, 27 bzw. 31, 32 der Leitungsübertrager 24 bzw. 33 geschwächte Speisespannung von der Speisespannungsquelle abgegriffen und dem Schaltnetzteil zur Fernspeisung der Signalverarbeitungseinrichtung 10 zugeführt. Diese umfaßt einen parallel zum zweiten Koppelkondensator 34 geschalteten dritten Glättungskondensator 35, zu dem parallel wiederum eine Reihenschaltung aus einer Primärwicklung 36 eines zweiten Schaltnetzteilübertragers 37 mit einem zweiten Zerhackerschalter 38 angeordnet ist. Der zweite Zerhackerschalter 38 wird über eine zweite Steuerleitung 40 von einer zweiten Steuerschaltung 39 abwechselnd in den leitenden und den gesperrten Zustand geschaltet. An die Anschlüsse einer Sekundärwicklung 41 des zweiten Schaltnetzteilübertragers 37 ist eine Reihenschaltung aus einer zweiten Diode 42 mit einem vierten Glättungskondensator 43 angeschlossen. Den Anschlüssen des vierten Glättungskondensators 43 wird die Speisespannung für die Signalverarbeitungseinrichtung 10 über Stromversorgungsanschlüsse 44, 45 abgegriffen.

Der vierte Glättungskondensator 43 ist mit seinen Anschlüssen weiterhin mit Eingängen 46 bzw. 47 der zweiten Steuerschaltung 39 verbunden, über die dieser die Spannung am vierten Glättungskondensator 43 als Versorgungsspannung und gleichzeitig Meßgröße zuleitbar ist.

Im übrigen entspricht die Funktion des Schaltnetzteils 35 bis 43 derjenigen des in der Speisespannungsquelle 12 enthaltenen Schaltnetzteils 15 bis 23.

Der zweite Leitungsübertrager 33 weist eine Primärwicklung 48 auf, die magnetisch in der gleichen Weise an die Sekundärwicklung 31, 32 gekoppelt ist, wie dies beim ersten Leitungsübertrager 24 zwischen dessen Primärwicklung 25 und dessen Sekundärwicklung 26, 27 der Fall ist. Die Anschlüsse der Primärwicklung 48 des zweiten Leitungsübertragers 33 sind mit der weiteren Signalverarbeitungseinrichtung 10 verbunden entsprechend der Verbindung der Anschlüsse der Primärwicklung 25 des ersten Leitungsübertragers 24 mit der ersten Signalverarbeitungseinrichtung 1. Aus- und Einkopplung der Fernmeldesignale von den Signalverarbeitungseinrichtungen 1 und 10 auf die Fernmeldeleitung 3 erfolgt bei diesem Ausführungsbeispiel bevorzugt symmetrisch, um in beiden Übertragungsrichtungen gleiche Verhältnisse zu schaffen.

Zur Erzeugung eines Kennsignals weist die Schaltungsanordnung am zweiten Leitungsende 8, 9, d.h. in Verbindung mit dem ferngespeisten Schaltnetzteil 35 bis 43, eine Einrichtung zur Erzeugung eines Kennsignals auf, welches aus einer Schwingung vorgebbarer Frequenz besteht und welches abgegeben wird, wenn die über das zweite Leitungsende 8, 9 zugeführte Speisespannung am zweiten Koppelkondensator 34 einen Wert aufweist, der niedriger ist als eine vorgegebene Bezugsspannung. Die besagte Einrichtung umfaßt eine Vergleichsstufe 49, die mit zwei Eingängen 50, 51 parallel zum zweiten Koppelkondensator 34 bzw. zum dritten Glättungskondensator 35 geschaltet ist. Über die Eingänge 50, 51 wird der Vergleichsstufe 49 die Speisespannung zugeführt. Die Vergleichsstufe 49 ist derart ausgebildet, daß sie bereits bei dem Speisespannungswert, der niedriger ist als die Bezugsspannung und auf den die Speisespannungsquelle 12 einstellbar ist, betriebsbereit ist, unabhängig davon, ob bei diesem Speisespannungswert das ferngespeiste Schaltnetzteil 35 bis 43 oder die davon mit Energie versorgte Signalverarbeitungseinrichtung 10 bereits in Funktion treten können. Die über die Eingänge 50, 51 der Vergleichsstufe 49 zugeleitete Speisespannung versorgt diese einerseits mit elektrischer Energie und wird andererseits zum Vergleich mit der vorgegebenen Bezugsspannung, die vorzugsweise innerhalb der Vergleichsstufe 49 erzeugt wird, herangezogen. Um in der Vergleichsstufe 49 die Erzeugung einer Bezugsspannung, die größer ist als der beschriebene niedrige Speisespannungswert, zu vermeiden, kann der beschriebene Vergleich beispielsweise auch zwischen einem bestimmten Bruchteil dieser Bezugsspannung und demselben Bruchteil der zugeführten Speisespannung durchgeführt werden, oder es können Schwellenwertschaltungen zum Einsatz kommen, die für die Bezugsspannung dimensioniert sind.

Parallel zum zweiten Koppelkondensator ist eine Reihenschaltung aus einem ersten Schalter 52 mit einem ersten ohmschen Widerstand 53 angeordnet, der seinerseits durch eine Reihenschaltung aus einem zweiten Schalter 54 mit einem zweiten ohmschen Widerstand 55 überbrückt ist. Die Vergleichsstufe 49 weist einen ersten und einen zweiten Steuerausgang 56 bzw. 57 auf, die mit dem ersten bzw. zweiten Schalter 52 bzw. 54 verbunden sind. Über den ersten Steuerausgang 56 wird der erste Schalter 52 von der Vergleichsstufe 49 in seinen leitenden Zustand überführt, wenn die Speisespannung an den Eingängen 50, 51 der Vergleichsstufe 49 kleiner ist als die Bezugsspannung, und der erste Schalter 52 wird in seinen gesperrten Zustand überführt, wenn die Speisespannung an den Eingängen 50, 51 die Bezugsspannung übersteigt. Am zweiten Steuerausgang 57 wird von der Vergleichsstufe 49 ein Schaltsignal mit der Frequenz des Kennsignals abgegeben, durch welches der zweite Schalter 54 abwechselnd leitend oder gesperrt geschaltet wird. Bei leitendem erstem Schalter 52 wird somit von der Vergleichsstufe 49 über den zweiten Schalter 54 eine Schwingung auf das zweite Leitungsende 8, 9 übertragen und über die Fernmeldeleitung 3 an deren erstes Leitungsende 6, 7 transportiert. Bei Speisespannungswerten oberhalb der Bezugsspannung wird dieses Kennsignal durch den ersten Schalter 52 unterbrochen.

Zum Empfang und zur Auswertung dieses Kennsignals umfaßt die Speisespannungsquelle 12 weiterhin einen Kennsignalübertrager 58, dessen Primärwicklung 59 an einem ihrer Anschlüsse mit dem Verbindungspunkt zwischen dem ersten Koppelkondensator und dem zweiten Teil 27 der Sekundärwicklung des ersten Leitungsübertragers 24 und an einem zweiten Anschluß mit dem Verbindungspunkt zwischen dem zweiten Glättungskondensator 23, der Sekundärwicklung 21 des ersten Schaltnetzteilübertragers 17 und dem Eingang 29 der ersten Steuerschaltung 19 verbunden ist. Somit ist die Primärwicklung 59 des Kennsignalübertragers 58 im Weg des durch die Speisespannung von der Speisespannungsquelle 12 hervorgerufenen Speisestromes, jedoch nicht im Signalweg für die Fernmeldesignale zwischen den Signalverarbeitungseinrichtungen 1 bzw. 10, angeordnet. Vorzugsweise ist die Frequenz des Kennsignals niedriger als die vom Fernmeldesignal umfaßten Frequenzen gewählt, so daß das Kennsignal von den Koppelkondensatoren 28, 34 im Gegensatz zu dem Fernmeldesignal nicht kurzgeschlossen wird.

Eine Sekundärwicklung 60 des Kennsignalübertragers 58 ist mit ihren Anschlüssen mit einem Kennsignalempfänger 61 verbunden. Über den Kennsignalübertrager 58 wird somit das Kennsignal ausgekoppelt und dem Kennsignalempfänger 61 zur Auswertung zugeleitet. Wird von diesem ein Kennsignal, d.h. eine Schwingung der vorbestimmten Frequenz, empfangen, wird an einem Schaltausgang 62 des Kennsignalempfängers 61 ein Schaltsignal abgegeben. Dieses wird einem mit dem Schaltausgang 62 verbundenen Umschalter 63 zugeführt, dessen Schaltzunge und dessen Umschaltkontakte mit der ersten Steuerschaltung 19 verbunden sind. Durch das Schaltsignal wird der Umschalter 63 beim Empfang eines Kennsignals aus einer ersten Schalterstellung in eine zweite Schalterstellung überführt. Dadurch wird in der Steuerschaltung 19 der Betrieb des ersten Zerhackerschalters 18 derart beeinflußt, daß die Speisespannungsquelle 12 auf die Abgabe einer vorgewählten Speisespannung mit einem Wert eingestellt wird, der höher ist als die Bezugsspannung. Ohne oder mit falschem Kennsignal verbleibt der Umschalter 63 in derjenigen Stellung, in der - gesteuert über die erste Steuerschaltung 19 - von der Speisespannungsquelle 12 lediglich ein Speisespannungswert abgegeben wird, der niedriger ist als die Bezugsspannung.

Bei Inbetriebnahme der Schaltungsanordnung nach Fig. 1, auch z.B. nach einer Betriebsunterbrechung, wird die Speisespannungsquelle 12 zunächst eine Speisespannung mit einem Wert abgeben, der niedriger als die Bezugsspannung ist. Diese Speisespannung wird über die Fernmeldeleitung 3 dem die weitere Signalverarbeitungseinrichtung 10 speisenden Schaltnetzteil 35 bis 43 zugeleitet, aber auch der Vergleichsstufe 49. Die Signalverarbeitungseinrichtung 10 kann für den in diesem Betriebszustand angenommenen Speisespannungswert dimensioniert sein; bevorzugt ist sie jedoch für einen Speisespannungswert dimensioniert, der höher ist als die Bezugsspannung. In dem erstgenannten Fall kann die Signalverarbeitungseinrichtung 10 bereits vollständig in Betrieb gehen, im letzteren Fall wird sie noch nicht betriebsbereit sein. Die Vergleichsstufe 49 dagegen ist bereits bei dem niedrigen Speisespannungswert betriebsfähig und erzeugt über den zweiten Schalter 54 und den zweiten ohmschen Widerstand 55 das Kennsignal, welches über den ersten Schalter 52 in der Fernmeldeleitung 3 zugeführt wird und dadurch über den Kennsignalübertrager 58 an den Kennsignalempfänger 61 gelangt. Durch diesen wird nun die erste Steuerschaltung 19 dazu veranlaßt, die Speisespannungsquelle 12 auf die Abgabe eines höheren Speisespannungswertes umzuschalten. In dem Fall, daß die weitere Signalverarbeitungseinrichtung 10 nur für den niedrigen Speisespannungswert dimensioniert ist, wird die Vergleichsstufe 49 entweder vollkommen weggelassen oder kein Kennsignal bzw. ein Kennsignal mit einer Frequenz abgeben, welche vom Kennsignalempfänger 61 nicht als Kennsignal für das Erhöhen der Speisespannung erkannt wird.

Im Ausführungsbeispiel nach Fig. 1 bilden die weitere Signalverarbeitungseinrichtung 10, der zweite Leitungsübertrager 33, das ferngespeiste Schaltnetzteil 35 bis 43 sowie die Einrichtung 49 bis 57 zur Erzeugng des Kennsignals eine am zweiten Leitungsende 8,9 angeschlossene Last 64.

Durch Kennsignale mit unterschiedlich vorgegebenen Frequenzen können auch Lasten, d.h. Signalverarbeitungseinrichtungen voneinander unterschieden werden, die mit unterschiedlichen Speisespannungswerten fernzuspeisen sind. Beispielsweise können Signalverarbeitungseinrichtungen für Speisespannungswerte von 200 V, 300 V, 400 V, 600 V usw. klassifiziert werden. Jeder dieser Klassen wird dann eine Kennfrequenz, d.h. ein Kennsignal vorgegebener, voneinander unterschiedlicher Frequenz zugeordnet. Die Vergleichsstufe 49 mit den ohmschen Widerständen 53, 55 und den Schaltern 52, 54, die einen Kennfrequenzgenerator bildet, wird dann bei einem Speisespannungswert, der niedriger ist als die beispielsweise auf 120 V festgelegte Bezugsspannung, durch den Schalter 52 zugeschaltet und bei Speisespannungswerten oberhalb 120 V abgeschaltet. Wird vom Kennsignalempfänger 61 nun ein Kennsignal mit der richtigen Frequenz erkannt, kann die Speisespannungsquelle 12 auf ihre nominelle Speisespannung oberhalb 120 V umgeschaltet werden. Wird jedoch vom Kennsignalempfänger 61 kein Kennsignal bzw. ein Kennsignal mit einer anderen Frequenz empfangen, bleibt die Speisespannung der Speisespannungsquelle 12 kleiner als 120 V. Außerdem kann vom Kennsignalempfänger 61 in diesem Fall eine Fehlermeldung ausgegeben werden.

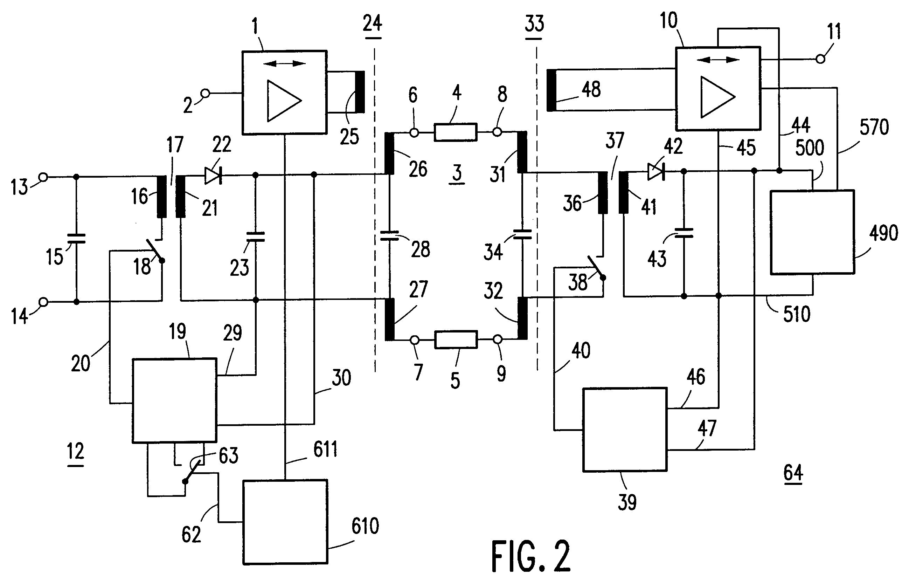

Die Schaltungsanordnung nach Fig. 2, die ein zweites Ausführungsbeispiel der Erfindung zeigt, entspricht in ihren der Signalübertragung und -verarbeitung und der Fernspeisung dienenden Elementen derjenigen nach Fig. 1, so daß darauf nicht näher eingegangen werden soll. Es sei lediglich erwähnt, daß bei der Schaltungsanordnung nach Fig. 2 der dritte Glättungskondensator 35 weggelassen bzw. mit dem zweiten Koppelkondensator 34 zusammengefaßt ist.

Für die Kennsignalerzeugung weist die Schaltungsanordnung nach Fig. 2 eine Vergleichsstufe 490 auf, der über einen ersten und einen zweiten Eingang 500 bzw. 510 die vom ferngespeisten Schaltnetzteil am vierten Glättungskondensator 43 bereitgestellte Spannung zugeführt wird, die auch über die Stromversorgungsanschlüsse 44, 45 die weitere Signalverarbeitungseinrichtung 10 speist. Die Vergleichsstufe 490, die bevorzugt mit einem Mikroprozessor oder einem vergleichbaren Steuerwerk ausgestattet sein kann, weist einen Steuerausgang 570 auf, an dem ein digital codiertes Signal, beispielsweise ein digital codiertes Impulssignal, abgegeben und der weiteren Signalverarbeitungseinrichtung 10 zur Übertragung über die Fernmeldeleitung 3 zugeführt werden kann. Dieses digitale Kennsignal enthält eine Information über den Speisespannungswert, für den die weitere Signalverarbeitungseinrichtung 10 dimensioniert ist.

Die Speisespannungsquelle 12 nach Fig. 2 weist einen digitalen Kennsignalempfänger 610 auf, dem das über die Fernmeldeleitung 3 von der Signalverarbeitungseinrichtung 1 empfangene Kennsignal über eine Kennsignalleitung 611 zugeführt wird. Durch Auswertung des zugeführten Kennsignals wird im digitalen Kennsignalempfänger 610 ein Schaltsignal erzeugt und über den Schaltausgang 62 dem Umschalter 63 zugeführt.

Beim Ausführungsbeispiel nach Fig. 2 sind die als Last 64 fremdgespeisten Einrichtungen, d.h. die weitere Signalverarbeitungseinrichtung 10, die zweite Steuerschaltung 39 und die Vergleichsstufe 490 derart dimensioniert, daß sie bereits bei einem Speisespannungswert betriebsbereit sind, der niedriger ist als die Bezugsspannung. Dabei genügt es wenn die weitere Signalverarbeitungseinrichtung 10 noch nicht die volle Betriebsbereitschaft zur Übertragung aller mit der ersten Signalverarbeitungseinrichtung 1 auszutauschenden Fernmeldesignale hat, sondern lediglich in der Lage ist, das Kennsignal von der Vergleichsstufe 490 über die Fernmeldeleitung 3 an die erste Signalverarbeitungseinrichtung 1 zu leiten. Bei Inbetriebnahme der Schaltungsanordnung nach Fig. 2, insbesondere nach Betriebsunterbrechungen, wird die Speisespannungsquelle 12 wieder derart betrieben, daß sie nur den geringen Speisespannungswert unterhalb der Bezugsspannung abgibt. Mit dieser Speisespannung wird das fremd gespeiste Schaltnetzteil 36 bis 43 am zweiten Leitungsende 8, 9 in Betrieb genommen und leitet die von ihm erzeugte Speisespannung über die Eingänge 500, 510 der Vergleichsstufe 490 sowie über die Stromversorgungsanschlüsse 44, 45 auch der weiteren Signalverarbeitungseinrichtung 10 zu. Von der Vergleichsstufe 490 wird die anliegende Speisespannung mit der Bezugsspannung verglichen und, sofern sie niedriger als diese ist, wird über den Steuerausgang 570 ein Kennsignal, bevorzugt als digitales Codewort und ggf. periodisch wiederholend, an die weitere Signalverarbeitungseinrichtung 10 geleitet, die dieses Kennsignal über die Fernmeldeleitung 3 der ersten Signalverarbeitungseinrichtung 1 übermittelt. Diese leitet über die Kennsignalleitung 611 das Kennsignal an den digitalen Kennsignalempfänger 610 weiter. Die Auswertung des Kennsignals im digitalen Kennsignalempfänger 610 gibt eine Information darüber, ob die Speisespannungsquelle 12 auf einen höheren Speisespannungswert umgeschaltet werden kann, und ggf. auch eine Information darüber, auf welchen von verschiedenen Speisespannungswerten diese Umschaltung zu erfolgen hat. Ist jedoch die weitere Signalverarbeitungseinrichtung 10 nur für den niedrigen Speisespannungswert unterhalb der Bezugsspannung dimensioniert, wird dies ebenfalls über ein entsprechend codiertes Kennsignal - ggf. auch durch Ausbleiben eines Kennsignals - angezeigt. Die Speisespannungsquelle 12 wird dann auf dem niedrigen Speisespannungswert betrieben; ggf. kann vom digitalen Kennsignalempfänger 610 wiederum ein Fehlersignal abgegeben werden. Auch mit dieser Art des Kennsignals können Lasten, die für unterschiedliche Speisespannungswerte dimensioniert sind, unterschieden und entsprechend korrekt ohne Gefahr einer Beschädigung durch Überspannung ferngespeist werden.

## Patentansprüche

1. Schaltungsanordnung zum Speisen wenigstens einer Last (64) aus einer Speisespannungsquelle (12), die zum Abgeben einer Speisespannung eingerichtet ist, die wahlweise auf einen Speisespannungswert, der niedriger als eine Bezugsspannung ist, und auf wenigstens einen weiteren Speisespannungswert, der höher als die Bezugsspannung ist, einstellbar ist, wobei von der (den) Last(en) (64) beim Empfangen einer Speisespannung, die niedriger als die Bezugsspannung ist, ein Kennsignal (bzw. Kennsignale) vorgegebener Art abgebbar ist (sind), durch welche(s) die Speisespannungsquelle auf einen vorgebbaren der Speisespannungswerte, die höher als die Bezugsspannung sind, umschaltbar ist.

2. Schaltungsanordnung nach Anspruch 1,
dadurch gekennzeichnet, daß das Umschalten auf einen Speisespannungswert, der höher als die Bezugsspannung ist, unterbleibt, wenn von der Speisespannungsquelle (12) kein Kennsignal der vorgegebenen Art empfangen wird.

3. Schaltungsanordnung nach Anspruch 1 oder 2,
dadurch gekennzeichnet, daß die Kennsignale Schwingungen mit für jeden der Speisespannungswerte oberhalb der Bezugsspannung unterschiedlich vorgebbarer Frequenz umfassen.

4. Schaltungsanordnung nach Anspruch 1 oder 2,
dadurch gekennzeichnet, daß die Signale digitale, für jeden der Speisespannungswerte oberhalb der Bezugsspannung unterschiedlich codierte Impulssignale umfassen.

5. Schaltungsanordnung nach einem der vorhergehenden Ansprüche,
dadurch gekennzeichnet, daß die Last(en) (64) von der Speisespannungsquelle (12) über eine Leitung (3) speisbar ist (sind).

6. Schaltungsanordnung nach Anspruch 5,
dadurch gekennzeichnet, daß die Last(en) (64) durch (eine) Signalverarbeitungseinrichtung(en) gebildet ist (sind) und die Leitung (3) eine Signalübertragungsleitung ist.

7. Stromversorgungseinrichtung für eine Telekommunikationsanlage,
gekennzeichet durch eine Schaltungsanordnung nach einem der vorhergehenden Ansprüche.

8. Telekommunikationsanlage,
gekennzeichnet durch eine Stromversorgungseinrichtung nach Anspruch 7.
